# EUROPEAN PATENT APPLICATION

(11) **EP 4 578 639 A1**
(43) Date of publication of application: **02.07.2025**
(21) Application number: 24223442.5
(22) Date of filing: 27.12.2024
(51) Int. Cl.: B29C 70/86, B29C 70/48, B29B 11/16, F16L 47/14, B29C 65/58, F16B 21/18, B29C 70/22

(54) **METHOD OF MANUFACTURING A COMPOSITE STORAGE TANK FOR LIQUID HYDROGEN**

(30) Priority: 29.12.2023 US 202363616113 P
(71) Applicant: General Electric Company, Cincinnati, Ohio 45215 (US)
(72) Inventor: ZHENG, Li, Niskayuna, 12309 (US); KRAY, Nicholas, West Chester, 45069 (US); SUN, Changjie, Niskayuna, 12309 (US); BARUA, Ananda, Niskayuna, 12309 (US); DECESARE, Douglas, Niskayuna, 12309 (US)
(74) Representative: Openshaw & Co.

(57) **Abstract**

A method of manufacturing a composite storage tank (212) for liquid hydrogen. The method includes placing a port (300) on a layup tool (340). The port (300) includes a flange portion (310) and a conduit portion (320) projecting from the flange portion (310). The conduit portion (320) includes a passage (302) extending through the conduit portion (320). The method also includes laying up a plurality of reinforcing fiber tows (342) on the layup tool (340) to integrate the flange portion (310) of the port (300) with the plurality of fiber tows. The plurality of fiber tows is laid up to form at least a portion of a preform including the port (300) for the composite storage tank (212). The method further includes introducing a matrix material to the preform and curing the preform including the matrix material to generate the composite storage tank (212).

## Description

### CROSS REFERENCE TO RELATED APPLICATIONS

The present application claims the benefit of Provisional Patent Application No. 63/616,113, filed on December 29, 2023, which is hereby incorporated by reference herein in its entirety.

### TECHNICAL FIELD

The present disclosure relates to composite storage tanks for liquid hydrogen and methods of manufacturing the storage tanks, particularly, composite storage tanks for liquid hydrogen that can be used on aircraft.

### BACKGROUND

The propulsion system for commercial aircraft typically includes one or more aircraft engines, such as turbofan jet engines. These engines may be powered by aviation turbine fuel, which is, typically, a combustible hydrocarbon liquid fuel, such as a kerosene-type fuel, having a desired carbon number and carbon-to-hydrogen ratio. Such fuel produces carbon dioxide upon combustion, and improvements to reduce or to eliminate such carbon dioxide emissions in commercial aircraft are desired.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic of an aircraft having a hydrogen fuel system.
FIG. 2 is a schematic, cross-sectional view of one of the turbine engines of the aircraft shown in FIG. 1.
FIG. 3 is schematic view of a composite hydrogen storage tank.
FIG. 4 is a flow chart of a process for manufacturing the composite hydrogen storage tank.
FIG. 5 shows a schematic view of a port that may be used as an integrated port of the composite hydrogen storage tank.
FIGS. 6A, 6B, and 6C are schematic views illustrating a method of forming a port for the composite hydrogen storage tank. FIG. 6A is a first step, FIG. 6B is a second step, and FIG. 6C is a third step.
FIGS. 7A and 7B are schematic views illustrating another method of forming a port for the composite hydrogen storage tank. FIG. 7A is a schematic view, of a shaped preform that may be used in the method. FIG. 7B is a partial, cross-sectional view, taken along line 7B-7B in FIG. 7A, of a portion of the port formed in FIG. 7A, showing a first flange joint configuration. FIG. 7C is a partial, cross-sectional view, similar to FIG. 7B showing an alternate (i.e., a second) flange joint configuration.
FIGS. 8A and 8B are schematic views illustrating a further method of forming a port for the composite hydrogen storage tank. FIG. 8A is a first step, and FIG. 8B is a second step.
FIG. 9 is a schematic, cross-sectional view of a step of the method of FIG. 3 with a port placed on the layup tool.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

As used herein, a "hydrogen fuel" is a combustible composition or a compound that includes diatomic hydrogen. More specifically, the hydrogen fuel can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the hydrogen fuel can consist essentially of diatomic hydrogen. The hydrogen fuel can exist in one or more phases such as a liquid phase, a gaseous phase, or combinations thereof.

As used herein, a "liquid hydrogen" is diatomic hydrogen substantially completely in the liquid phase. The liquid hydrogen can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the liquid hydrogen can consist essentially of diatomic hydrogen.

As used herein, a "gaseous hydrogen" is diatomic hydrogen substantially completely in the gaseous phase. The gaseous hydrogen can include at least eighty weight percent diatomic hydrogen, at least ninety weight percent diatomic hydrogen, at least ninety-five weight percent diatomic hydrogen, or at least ninety-nine weight percent diatomic hydrogen by total weight of the fuel. In some embodiments, the gaseous hydrogen can consist essentially of diatomic hydrogen.

As used herein, the term "substantially completely" as used to describe a phase of the hydrogen fuel refers to at least seventy-five percent by mass of the described portion of the hydrogen fuel being in the stated phase, such as at least eighty-five percent, such as at least ninety percent, such as at least ninety-two and a five tenths percent, such as at least ninety-five percent, such as at least ninety-seven and a five tenths percent, or such as at least ninety-nine percent by mass of the described portion of the hydrogen fuel being in the stated phase.

The singular forms "a," "an," and "the" include plural references unless the context clearly dictates otherwise.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC). The composite may be formed of a matrix material and a reinforcing element, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle. The polymeric matrix material may include, for example, epoxy resin, bismaleimide (BMI) resin, polyimide resin, or thermoplastic resin.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. The adhesive can require curing at elevated temperatures or other hardening techniques.

As used herein, PMC refers to a class of materials. The PMC material may be a prepreg. A prepreg is a reinforcement material (e.g., a reinforcing fiber) pre-impregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods, including, but not limited to, melt infiltration, chemical vapor infiltration, polymer impregnation pyrolysis (PIP), or any combination thereof.

As used herein, an alloy is "based" on a particular element when that element is present in the alloy at the greatest weight percent, by total weight of the alloy, of all elements contained in the alloy. For example, an iron-based alloy has a higher weight percentage of iron than any other single element present in the alloy.

The term "metallic" as used herein in reference to a material that is a metal-based material. Such metals include, but not limited to, titanium, iron, aluminum, stainless steel, and nickel alloys. A metallic material or a metal-alloy can be a combination of at least two or more elements or materials, where at least one is a metal.

Combustible hydrocarbon liquid fuel, such as Jet-A fuel, has long been used in turbine engines for aircraft. The fuel storage aboard the aircraft has been designed for such fuels. A hydrogen fuel (e.g., diatomic hydrogen) may be utilized to eliminate carbon dioxide emissions from commercial aircraft. Hydrogen fuel, however, poses a number of challenges as compared with combustible hydrocarbon liquid fuel. For example, in its gaseous form, hydrogen fuel has a much lower power density than Jet-A fuel. Even when hydrogen fuel is stored in the liquid phase, the liquid hydrogen fuel requires approximately four times the volume of Jet-A fuel to operate the aircraft over a given range. Moreover, hydrogen fuel has a relatively low boiling point and must be stored at cryogenic temperatures to be maintained in the liquid phase. A storage tank holding liquid hydrogen cryogenically requires more space overall and has an increased weight as compared with a storage tank holding a comparable volume of Jet-A fuel. These space and weight requirements can be a particular disadvantage when using hydrogen fuel for applications such as aircraft, where space and weight are at a premium. The present disclosure discusses a hydrogen storage tank that may be used as a fuel tank for storing liquid hydrogen (diatomic hydrogen) onboard an aircraft for use as a fuel to power the aircraft or components thereof.

Composite materials may be used to form the hydrogen storage tank discussed herein, which may be referred to as a composite hydrogen storage tank. The ports (e.g., outlets and inlets) of the composite hydrogen storage tank include integrated, seamless ports that minimize the opportunity for hydrogen to escape. Methods of forming these ports and the composite hydrogen storage tank are discussed herein. The composite hydrogen storage tank discussed herein may be particularly suitable for use in aircraft.

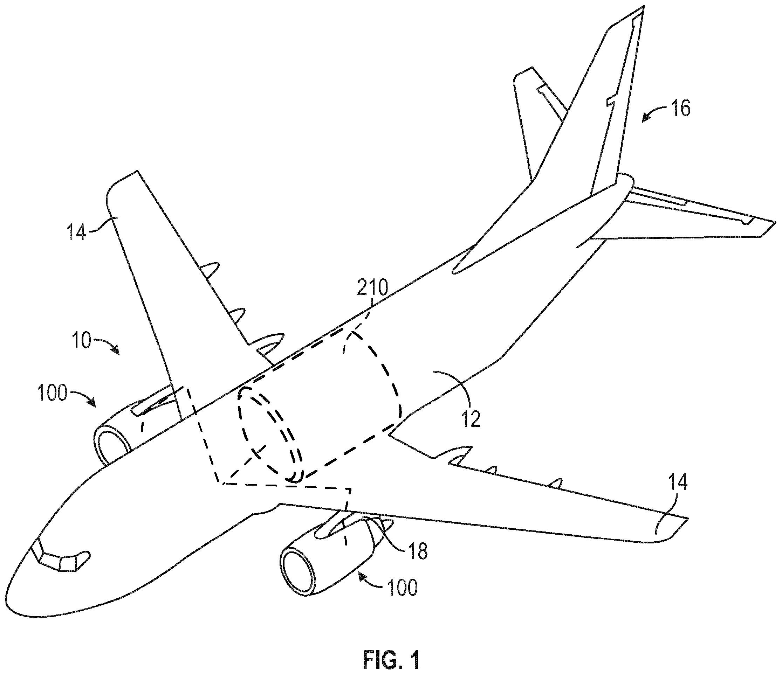

FIG. 1 is a schematic view of an aircraft 10 that may implement the composite hydrogen storage tank. The aircraft 10 includes a fuselage 12, a pair of wings 14 attached to the fuselage 12, and an empennage 16. The aircraft 10 also includes a propulsion system that produces a propulsive thrust required to propel the aircraft 10 in flight, during taxiing operations, and the like. The propulsion system for the aircraft 10 shown in FIG. 1 includes a pair of turbine engines 100. As depicted in FIG. 1, each turbine engine 100 is attached to one of the wings 14 by a pylon 18 in an under-wing configuration. Although the turbine engines 100 are shown attached to the wing 14 in an under-wing configuration in FIG. 1, the turbine engine 100 may have alternative configurations and be coupled to other portions of the aircraft 10. For example, the turbine engine 100 may additionally or alternatively include one or more aspects coupled to other parts of the aircraft 10, such as, for example, the empennage 16 and the fuselage 12.

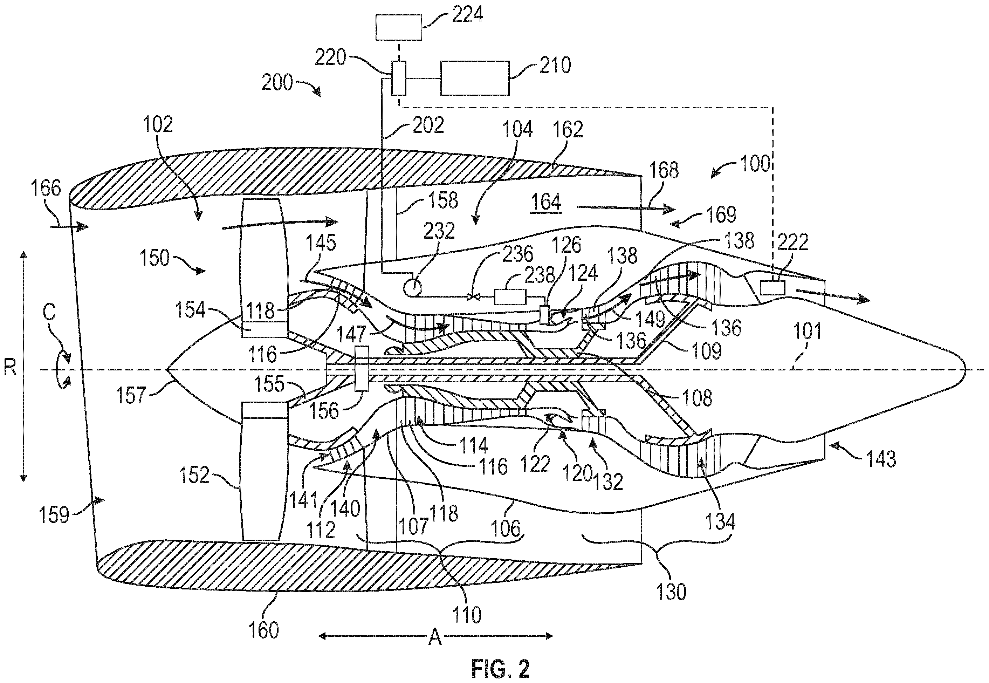

As will be described in more detail below with reference to FIG. 2, the turbine engines 100 shown in FIG. 1 are turbine engines that are each capable of selectively generating a propulsive thrust for the aircraft 10. The amount of propulsive thrust may be controlled at least in part based on a volume of fuel provided to the turbine engines 100 via a fuel system 200 (see FIG. 2). As discussed herein, the fuel is a hydrogen fuel that is stored in a fuel tank 210 of the fuel system 200. At least a portion of the fuel tank 210 is located in the fuselage 12 and, as shown in FIG. 1, entirely within the fuselage 12. The fuel tank 210, however, may be located at other suitable locations in the fuselage 12 or the wing 14, such as with a portion of the fuel tank 210 in the fuselage 12 and a portion of the fuel tank 210 in the wing 14. Alternatively, the fuel tank 210 may also be located entirely within the wing 14. A single fuel tank 210 is depicted in FIG. 1, but a plurality of fuel tanks 210 may be used.

Although the aircraft 10 shown in FIG. 1 is an airplane, the embodiments described herein may also be applicable to other aircraft 10, including, for example, helicopters and unmanned aerial vehicles (UAV). The aircraft discussed herein are fixed-wing aircraft or rotor aircraft that generate lift by aerodynamic forces acting on, for example, a fixed wing (e.g., the wing 14) or a rotary wing (e.g., a rotor of a helicopter), and are heavier-than-air aircraft, as opposed to lighter-than-air aircraft (such as a dirigible). In addition, the embodiments described herein may also be applicable to other applications where hydrogen is used as a fuel. The engines described herein are turbine engines, but the embodiments described herein also may be applicable to other engines. Further, the engine, specifically, the gas turbine engine, is an example of a power generator using hydrogen as a fuel, but hydrogen may be used as a fuel for other power generators, including, for example, fuel cells (hydrogen fuel cells). Such power generators may be used in various applications including stationary power-generation systems (including both turbines and hydrogen fuel cells) and other vehicles beyond the aircraft 10 explicitly described herein, such as boats, ships, cars, trucks, and the like.

FIG. 2 is a schematic, cross-sectional view of one of the turbine engines 100 of the aircraft 10 shown in FIG. 1. The turbine engine 100 has an axial direction A (extending parallel to a longitudinal centerline axis 101, shown for reference in FIG. 2), a radial direction R, and a circumferential direction. The circumferential direction C extends in a direction rotating about the longitudinal centerline axis 101 (the axial direction A). In FIG. 2, the turbine engine 100 depicted is a high bypass turbofan engine, including a fan section 102 and a turbo-engine 104 disposed downstream from the fan section 102.

The turbo-engine 104 depicted in FIG. 2 includes, in serial flow relationship, a compressor section 110, a combustion section 120, and a turbine section 130. The turbo-engine 104 is substantially enclosed within an outer casing 106 (also referred to as a housing or a nacelle) that is substantially tubular and defines a core inlet 141. In this embodiment, the core inlet 141 is annular. As schematically shown in FIG. 2, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 can include a plurality of compressor stages. In each stage, a plurality of compressor blades 116 rotates relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 can be a part of a compressor rotor that includes a disk and each compressor blade 116 of the plurality of compressor blades 116 extends radially from the disk. Other configurations of the compressor rotor can be used, including, for example, blisks where the disk and the compressor blades 116 are integrally formed with each other to be a single piece. The corresponding static compressor vanes 118 are located upstream of and adjacent to the rotating compressor blades 116. The compressor vanes 118 for a stage of the compressor can be mounted to a core casing 107 in a circumferential arrangement. The core casing 107 can define, at least in part, the core air flow path 140. Each compressor stage can be used to sequentially compress the core air 145 flowing through the core air flow path 140, generating compressed air 147. Any suitable number of compressor blades 116, compressor vanes 118, and compressor stages can be used.

Each of the HP turbine 132 and the LP turbine 134 also can include a plurality of turbine stages. In each stage, a plurality of turbine blades 136 rotates relative to a corresponding plurality of static turbine vanes 138 (also called a nozzle) to extract energy from combustion gases 149 passing through the stage. The turbine blades 136 can be a part of a turbine rotor. Any suitable configuration for a turbine rotor can be used, including, for example, a disk with the plurality of turbine blades 136 extending from the disk. The corresponding static turbine vanes 138 are located upstream of and adjacent to the rotating turbine blades 136. The turbine vanes 138 for a stage of the turbine can be mounted to the core casing 107 in a circumferential arrangement.

In the combustion section 120, fuel, received from the fuel system 200, is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit 236 of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The fuel system 200 is configured to store the hydrogen fuel in the fuel tank 210 and to deliver the hydrogen fuel the turbine engine 100 and, more specifically, the fuel nozzles 126 via a fuel delivery assembly 202. The fuel delivery assembly 202 includes tubes, pipes, conduits, and the like, to fluidly connect the various components of the fuel system 200 to each other. The fuel delivery assembly 202 provides a flow path of the hydrogen fuel from the fuel tank 210 downstream to the turbine engine 100 and, more specifically, the fuel nozzles 126.

The fuel tank 210 may be configured to hold the hydrogen fuel at least partially within the liquid phase and may be configured to provide hydrogen fuel to the fuel delivery assembly 202 substantially completely in the liquid phase, such as completely in the liquid phase. For example, the fuel tank 210 may have a fixed volume and contain a volume of the hydrogen fuel in the liquid phase. As the fuel tank 210 provides hydrogen fuel to the fuel delivery assembly 202 substantially completely in the liquid phase, the volume of the liquid hydrogen fuel in the fuel tank 210 decreases and the remaining volume in the fuel tank 210 is made up by, for example, hydrogen, such as diatomic hydrogen, substantially completely in the gaseous phase (gaseous hydrogen).

To store the fuel including diatomic hydrogen substantially completely in the liquid phase, the fuel including diatomic hydrogen may be stored in the fuel tank 210 at very low (cryogenic) temperatures. For example, the fuel including diatomic hydrogen may be stored in the fuel tank 210 at about negative two hundred fifty-three degrees Celsius or less at atmospheric pressure, or at other temperatures and pressures to maintain the fuel including diatomic hydrogen substantially completely in the liquid phase. As discussed in more detail below, the fuel tank 210 discussed herein is a composite component formed, at least in part, by composite material. Various suitable means may be used with the composite material to minimize heat transfer and maintain the hydrogen fuel in the liquid phase at the cryogenic temperatures. These means include, for example insulation including, for example, vacuum jacketing. As noted above, the liquid hydrogen fuel, including diatomic hydrogen, may be supplied from the fuel tank 210 to the fuel delivery assembly 202, which includes tubes, pipes, conduits, and the like. The fuel tank 210 may be fluidly connected to the fuel delivery assembly 202 via one or more ports, as will be discussed further below.

The hydrogen fuel is delivered to the engine by the fuel delivery assembly 202 in the gaseous phase, the supercritical phase, or both (at least one of the gaseous phase or the supercritical phase). The fuel system 200 thus includes a vaporizer 220 in fluid communication with the fuel delivery assembly 202 to heat the liquid hydrogen fuel flowing through the fuel delivery assembly 202. The vaporizer 220 is positioned in the flow path of the hydrogen fuel between the fuel tank 210 and the turbine engine 100. The vaporizer 220 may be positioned at least partially within the fuselage 12 (FIG. 1) or the wing 14 (FIG. 1), such as at least partially within the wing 14. The vaporizer 220 may, however, be positioned at other suitable locations in the flow path of the hydrogen between the fuel tank 210 and the turbine engine 100. For example, the vaporizer 220 may be positioned external to the fuselage 12 and the wing 14, and positioned at least partially within the pylon 18 (FIG. 1) or the turbine engine 100. When positioned in the turbine engine 100, the vaporizer may be located in the nacelle 160, for example. Although only one vaporizer 220 is shown in FIG. 2, the fuel system 200 may include multiple vaporizers 220. For example, when a vaporizer 220 is positioned in the turbine engine 100 or in the pylon 18 and functions as a primary vaporizer configured to operate once the turbine engine 100 is in a thermally stable condition, another vaporizer 220 is positioned upstream of the primary vaporizer and proximate to the fuel tank 210 and functions as a primer vaporizer during start-up (or prior to start-up) of the turbine engine 100.

The vaporizer 220 is in thermal communication with at least one heat source. As depicted in FIG. 2, the vaporizer 220 is in thermal communication with a primary heat source 222 and an auxiliary heat source 224. In this embodiment, primary heat source 222 is waste heat from the turbine engine 100. As depicted in FIG. 2, the primary heat source 222 is shown schematically as a heat exchanger positioned in the core air flow path 140 to extract heat from the combustion gases 149. The vaporizer 220 may be thermally connected to other heat sources of the turbine engine 100 including, for example, at least one of a main lubrication system, a compressor cooling air (CCA) system, an active thermal clearance control (ATCC) system, or a generator lubrication system. In such a manner, the vaporizer 220 is configured to operate by drawing heat from the primary heat source 222 once the turbine engine 100 is capable of providing enough heat, via the primary heat source 222, to the vaporizer 220, in order to facilitate operation of the vaporizer 220.

The vaporizer 220 may be heated by any suitable heat source, and, in this embodiment, for example, the auxiliary heat source 224 is a heat source external to the turbine engine 100. The auxiliary heat source 224 may include, for example, an electrical power source, a catalytic heater or burner, and/or a bleed airflow from an auxiliary power unit. The auxiliary heat source 224 may be integral to the vaporizer 220, such as when the vaporizer 220 includes one or more electrical resistance heaters, or the like, that are powered by the electrical power source. In this configuration, the auxiliary heat source 224 may provide heat for the vaporizer 220 independent of whether or not the turbine engine 100 is running and can be used, for example, during start-up (or prior to start-up) of the turbine engine 100.

As noted, the vaporizer 220 is in communication with the flow of the hydrogen fuel through the fuel delivery assembly 202. The vaporizer 220 is configured to draw heat from at least one of the primary heat source 222 and the auxiliary heat source 224 to heat the flow of hydrogen fuel from a substantially completely liquid phase to a substantially completely gaseous phase or to a substantially completely supercritical phase.

The fuel system 200 also includes a high-pressure pump 232 in fluid communication with the fuel delivery assembly 202 to direct the flow of the hydrogen fuel through the fuel delivery assembly 202 to the turbine engine 100. The high-pressure pump 232 may generally be the primary source of pressure rise in the fuel delivery assembly 202 between the fuel tank 210 and the turbine engine 100. The high-pressure pump 232 may be configured to increase a pressure in the fuel delivery assembly 202 to a pressure greater than a pressure within the combustion chamber 124 of the combustor 122 of the turbine engine 100, and to overcome any pressure drop of the components placed downstream of the high-pressure pump 232.

The high-pressure pump 232 is positioned within the flow of hydrogen fuel in the fuel delivery assembly 202 at a location downstream of the vaporizer 220. In this embodiment, the high-pressure pump 232 is positioned external to the fuselage 12 (FIG. 1) and the wing 14 (FIG. 1) and is positioned at least partially within the pylon 18 (FIG. 1), or at least partially within the turbine engine 100. More specifically, the high-pressure pump 232 is positioned within the turbine engine 100. With the high-pressure pump 232 located in such a position, the high-pressure pump 232 may be any suitable pump configured to receive the flow of hydrogen fuel in a substantially completely gaseous phase or a supercritical phase. In other embodiments, however, the high-pressure pump 232 may be positioned at other suitable locations, including other positions within the flow path of the hydrogen fuel. For example, the high-pressure pump 232 may be located upstream of the vaporizer 220 and may be configured to receive the flow of hydrogen fuel through the fuel delivery assembly 202 in a substantially completely liquid phase.

The fuel system 200 also includes a fuel metering unit 236 in fluid communication with the fuel delivery assembly 202. Any suitable fuel metering unit 236 may be used including, for example, a fuel metering valve placed in fluid communication with the fuel delivery assembly 202. The fuel delivery assembly 202 is configured to provide the fuel to the fuel metering unit 236, and the fuel metering unit 236 is configured to receive hydrogen fuel from a fuel source such as the fuel tank 210. The fuel metering unit 236 is further configured to provide the flow of the hydrogen fuel to the combustor 122. The fuel metering unit 236 is configured to provide a desired volume of the hydrogen fuel, at, for example, a desired flow rate, to a fuel manifold 238 of the turbine engine 100. The fuel manifold 238 then distributes (provides) the hydrogen fuel received to the fuel nozzles 126 (a plurality of fuel nozzles). Adjusting the fuel metering unit 236 changes the volume of fuel (and diluent) provided to the combustion chamber 124 of the combustor 122 and, thus, changes the amount of propulsive thrust produced by the turbine engine 100 to propel the aircraft 10.

The turbine engine 100 and, more specifically, the turbo-engine 104 further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of thermal energy or kinetic energy from the combustion gases 149 is extracted via the one or more stages of the turbine blades 136 and the turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the thermal energy or the kinetic energy is extracted from the combustion gases 149 via one or more stages of the turbine blades 136 and the turbine vanes 138 of the LP turbine 134. This causes the LP shaft 109 to rotate, which supports operation of the LP compressor 112 (self-sustaining cycle), and rotation of the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, are coupled to rotatable elements such as the compressor rotors and the turbine rotors.

The fan section 102 shown in FIG. 1 includes a fan 150 having a plurality of fan blades 152 coupled to a disk 154. The fan blades 152 and the disk 154 are rotatable, together, about the longitudinal centerline (axis) 101 by a fan shaft 155 that is powered by the LP shaft 109 across a power gearbox, also referred to as a gearbox assembly 156. In this way, the fan 150 is drivingly coupled to, and powered by, the turbo-engine 104, and the turbine engine 100 is an indirect drive engine. The gearbox assembly 156 is shown schematically in FIG. 1. The gearbox assembly 156 is a reduction gearbox assembly for adjusting the rotational speed of the fan shaft 155 and, thus, the fan 150 relative to the LP shaft 109 when power is transferred from the LP shaft 109 to the fan shaft 155. The disk 154 is covered by a fan hub 157 aerodynamically contoured to promote an airflow through the plurality of fan blades 152. Further, the nacelle 160 circumferentially surrounds the fan 150, and in the depicted embodiment, at least a portion of the turbo-engine 104. The nacelle 160 may also be referred to as an annular fan casing or an outer nacelle. The nacelle 160 is supported relative to the turbo-engine 104 and, more specifically, the outer casing 106 by a plurality of outlet guide vanes 158 that are circumferentially spaced about the nacelle 160 and the turbo-engine 104. A downstream section 162 of the nacelle 160 extends over an outer portion of the turbo-engine 104 and, more specifically, the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable turbine engine, such as a turboshaft engine, a turboprop engine, a turbojet engine, an unducted single fan engine, and the like. In such a manner, in other embodiments, the turbine engine may have other suitable configurations, such as other suitable numbers or arrangements of shafts, compressors, turbines, fans, etc. Further, although the turbine engine 100 is shown as an indirect drive, fixed-pitch turbofan engine, in other configurations, the turbine engine 100 may be a direct drive engine, which does not have a power gearbox (e.g., the gearbox assembly 156) and, in which, the LP shaft 109 is directly connected to the fan 150. The fan speed is the same as the LP shaft speed for a direct drive engine. In other configurations, the turbine engine 100 may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

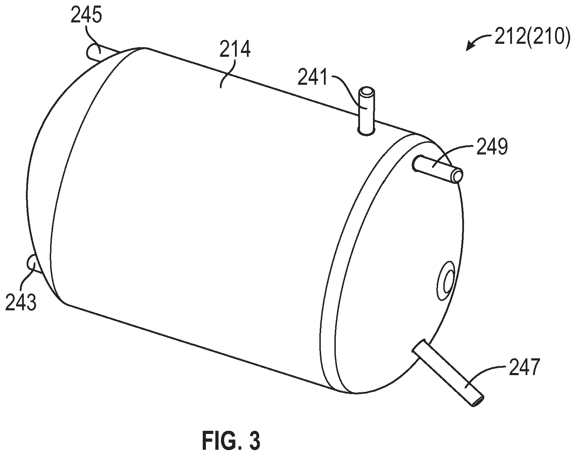

FIG. 3 is schematic view of the fuel tank 210. As discussed above, the fuel tank 210 may be a composite tank for storing liquid hydrogen, which is referred to herein as a composite hydrogen storage tank 212. The composite hydrogen storage tank 212 shown in FIG. 3 (and also the fuel tank 210 shown in FIG. 1) is depicted as a circular, cylindrical tank, but other geometries may be used. In particular, the composite materials used to form the composite hydrogen storage tank 212 may allow for irregularly shaped fuel tanks 210 to be formed. Such irregular shaped fuel tanks 210 may be particularly advantageous for vehicles, such as cars, trucks, and the aircraft 10 depicted in FIG. 1, where space is at a premium and forming irregular shapes may allow for additional positioning of the fuel tank 210, such as in the wings 14 (FIG. 1) for example.

The composite hydrogen storage tank 212 includes at least one vessel wall 214 formed from the composite materials discussed herein and, more specifically, a plurality of reinforcing fiber tows embedded in a matrix, such as PMC materials discussed in more detail above. An inner vessel wall, such as the vessel wall 214, defines a chamber in which the hydrogen fuel in the liquid phase (liquid hydrogen) is stored. As noted above, some amount of gaseous hydrogen will also be present in the chamber. The gaseous hydrogen will collect in an upper portion of the chamber and the liquid hydrogen will be located in the lower portion of the chamber. As the fuel tank 210 provides hydrogen fuel, the volume of the liquid hydrogen fuel in the fuel tank decreases, with the remaining volume in the fuel tank made up of gaseous hydrogen.

The composite hydrogen storage tank 212 depicted in FIG. 3 includes a plurality of fluid ports. Each of these fluid ports fluidly connects the chamber to outside of the fuel tank 210 and penetrates vessel wall 214. Each of the fluid ports may connect to a fluid line, such as a pipe, tube, conduit, etc., suitable for the application to convey the fluid to or from the fuel tank 210 and, more specifically, the chamber of the fuel tank 210. One fluid port is a gaseous hydrogen extraction port 241. As noted above, gaseous hydrogen may collect in the upper portion of the chamber. The gaseous hydrogen extraction port 241 is fluidly connected to the upper portion of the chamber, and may extend radially outward from the fuel tank 210. The gaseous hydrogen extraction port 241 may be used to remove (extract) the gaseous hydrogen from the chamber, such as by venting the chamber to the atmosphere. The gaseous hydrogen extraction port 241 may be used to regulate the pressure in the chamber. A suitable control valve, such as a pressure control valve, may be located in the gaseous hydrogen extraction line to regulate the pressure and to control venting the chamber.

The fuel tank 210 is filled using at least one liquid hydrogen fill port. In this embodiment, the fuel tank 210 includes two liquid hydrogen fill ports, a lower liquid hydrogen fill port 243 and an upper liquid hydrogen fill port 245. Each of the lower liquid hydrogen fill port 243 and the upper liquid hydrogen fill port 245 is connected to a liquid hydrogen fill line (not shown) that may extend from the chamber to a coupling located on the exterior of the aircraft 10, such as on the exterior of the fuselage 12. The lower liquid hydrogen fill port 243 and the upper liquid hydrogen fill port 245 may be connected to separate hydrogen fill lines or to a common hydrogen file line. A valve may be incorporated into the coupling or placed between the coupling and the chamber. A liquid hydrogen source is coupled to the coupling and the valve opened to fill the fuel tank 210 with liquid hydrogen. The lower liquid hydrogen fill port 243 is fluidly connected to the chamber at the lower portion and may be used to fill the fuel tank 210 from the bottom (bottom fill). The upper liquid hydrogen fill port 245 is fluidly connected to the chamber at the upper portion and may be used to fill the fuel tank 210 from the top (top fill). In some embodiments, one of the lower liquid hydrogen fill port 243 or the upper liquid hydrogen fill port 245 may be used to fill the fuel tank 210. In other embodiments, both the lower liquid hydrogen fill port 243 and the upper liquid hydrogen fill port 245 may be used simultaneously to fill the fuel tank 210 with a favorable hydrogen quality, such as desired temperatures, pressures and degrees of saturation for the hydrogen in the fuel tank 210.

A fuel extraction port 247 is fluidly coupled to the chamber and the fuel delivery assembly 202 (FIG. 1) to provide hydrogen fuel to the fuel delivery assembly 202. The fuel tank 210, more specifically, the chamber, is fluidly coupled to the fuel delivery assembly 202 by the fuel extraction port 247. As the fuel tank 210 provides hydrogen fuel, the volume of the liquid hydrogen fuel in the fuel tank 210 decreases, and the fuel extraction port 247 is fluidly coupled to the chamber at the lower portion of the chamber. Gaseous hydrogen in a fuel line connected to the fuel extraction port 247 may be separated from the liquid hydrogen fuel and the gaseous hydrogen may recirculated back to the fuel tank 210, and, more specifically, the chamber, by a hydrogen vapor return line fluidly connected to a hydrogen vapor return port 249. The hydrogen vapor return port 249 may be fluidly connected to the chamber at the upper portion of the chamber to return the gaseous hydrogen to the vapor space within the chamber.

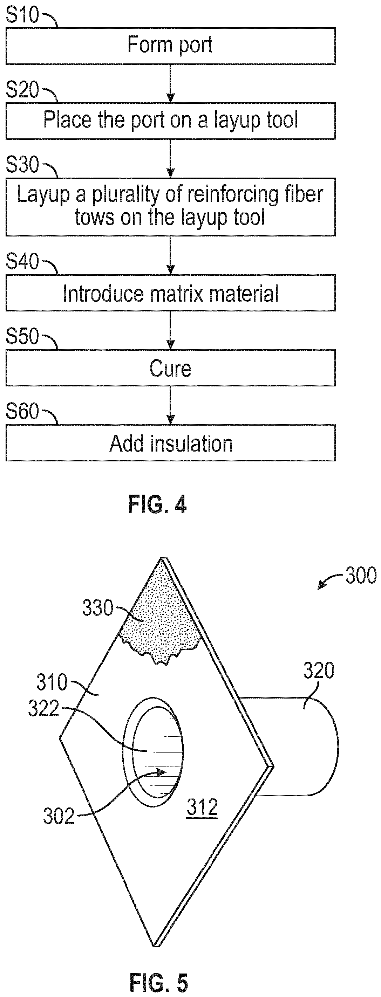

To avoid hydrogen leaking from the fuel tank 210, the ports discussed herein are integrally and seamlessly formed with the composite hydrogen storage tank 212 in, for example, the manner discussed further below. Reference numeral 300 (FIG. 5) is used to refer generally to any one of these ports. These ports 300 (FIG. 5) may be inlets, such as, for example, the lower liquid hydrogen fill port 243, the upper liquid hydrogen fill port 245, or the hydrogen vapor return port 249, or outlets, such as the gaseous hydrogen extraction port 241 and the fuel extraction port 247.

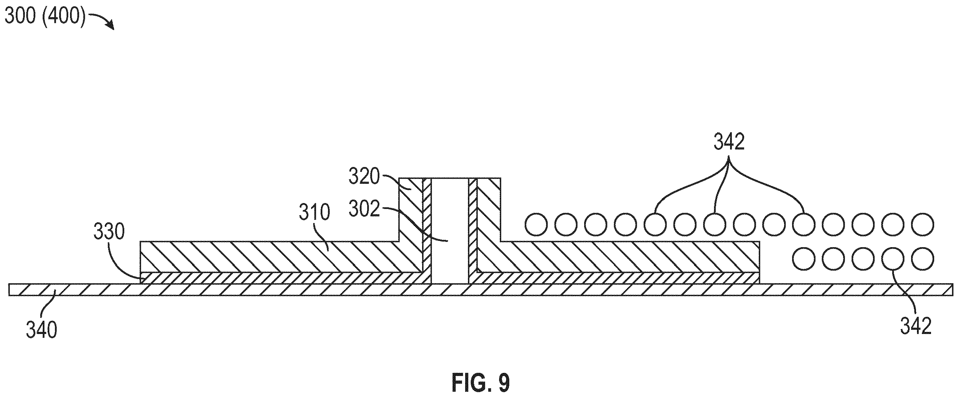

FIG. 4 is a flow chart of a process for manufacturing the composite hydrogen storage tank 212 (FIG. 3). In the method shown in FIG. 4, the port 300 is first formed in step S10 and then placed on a layup tool, such as a mandrel 340 (FIG. 9), in step S20. Then, the composite hydrogen storage tank 212 (FIG. 3) and, more specifically, the vessel wall 214 are formed by laying up a plurality of reinforcing fiber tows 342 (FIG. 9) on the mandrel 340 in step S30 to form a tank preform. A matrix material is introduced into the tank preform in step S40, and the tank preform is cured to form the composite hydrogen storage tank 212 in step S50. Insulation may be added in step S60 to minimize heat transfer and to maintain the hydrogen in the chamber of the composite hydrogen storage tank 212 in the liquid state. More specifically, insulation can be to an outer surface of the composite hydrogen storage tank 212 formed during curing the preform. In the flow chart of FIG. 4, step S60 is shown as occurring after cure, but the insulation may be applied at other points in the process. Additional details of the process for manufacturing the composite hydrogen storage tank 212 will be discussed further below.

FIG. 5 is a schematic view showing the port 300 that may be used as an integrated port of the composite hydrogen storage tank 212 (FIG. 3). As noted above, the port 300 may be formed first and then integrated with the preform of the composite hydrogen storage tank 212, such as during the process of laying up the reinforcing fiber tows (step S30 (FIG. 4)). The port 300 shown in FIG. 5 includes a flange portion 310 and a conduit portion 320 projecting from the flange portion 310. The conduit portion 320 includes a passage 302 extending through the conduit portion 320. The lines discussed above, e.g., the fuel delivery assembly 202, may be connected to the conduit portion 320, and the passage 302 is a fluid passage through which fluid will flow between the chamber of the composite hydrogen storage tank 212 and these lines. The flange portion 310 includes an inward facing surface 312, and the conduit portion 320 includes an inward facing surface 322.

The inward facing surface 322 of the conduit portion 320 defines the passage 302 and the inward facing surface 312 may face or form a portion of the inner surface defining the chamber of the composite hydrogen storage tank 212. Accordingly, these surfaces may be exposed to liquid hydrogen. The composite materials discussed herein, particularly, the PMC materials including those using carbon fibers in the reinforcing fiber tows of the PMC may be susceptible to damage by exposure to the liquid hydrogen. The carbon fiber and the matrix material may become embrittled because of the cryogenic temperatures. In addition, hydrogen may diffuse or otherwise seep through the composite material, such as from microcracking, for example, if the composite material is used alone as the inner vessel wall (e.g., vessel wall 214 (FIG. 3)). The inward facing surface 312 of the flange portion 310 and the inward facing surface 322 of the conduit portion 320 may include a hydrogen barrier layer 330 formed thereon. The hydrogen barrier layer 330 is a layer of material that protects the composite material of the port 300 from direct contact with hydrogen and may act as a diffusion barrier for the hydrogen. Materials suitable for use as the hydrogen barrier layer 330 may include metallic materials, such as metals and metal alloys, including aluminum, aluminum alloys, and steel alloys. The hydrogen barrier layer 330 may thus be a metallic layer. Non-metal materials, such as polymeric materials (e.g., polyamide, polyethylene) can be used as barrier materials due to their low hydrogen permeability. The hydrogen barrier layer 330 may be a liner that is integrally formed with the port 300 when the port 300 is placed on the mandrel 340 (FIG. 9), as will be discussed further below, but the hydrogen barrier layer 330 may be formed on the inward facing surface 312 of the flange portion 310 and the inward facing surface 322 of the conduit portion 320 such as by spray coating. The hydrogen barrier layer 330 can be used to prevent the movement of hydrogen and not necessarily to provide structural support. Accordingly, these layers can be relatively thin such as from five mils to fifty mils. Such thicknesses also help to minimize weight.

Various methods may be used to form the port 300 and various methods are discussed in more detail below. The various methods of forming the port include, in general, forming the flange portion 310 and forming the conduit portion 320. The port 300 and thus each of the flange portion 310 and the conduit portion 320 may be composites comprising a plurality of reinforcing fiber tows and a matrix. The methods may thus include forming preforms of the port 300 and, more specifically, of each of the flange portion 310 and the conduit portion 320 that comprise a plurality of reinforcing fiber tows. Various suitable methods may be used to form the preform of reinforcing fiber tows. Such methods may include laying up a plurality of plies to form an initial preform with an initial shape. Each of the plies includes a plurality of fiber tows. The plurality of plies may be laid up by hand (i.e., hand lay-up) or using an automated process including an automated lay-up system. The automated lay-up system and corresponding automated process may be, for example, an Automated Tape Laying (ATL) system, an Automated Fiber Placement (AFP) system, a Thermoplastic Fiber/Tape Placement (TTP) system, Pick-and-Place system, and the like. When the initial preform is cylindrical, such layup methods may include winding the plurality of reinforcing fiber tows around a tool, such as a mandrel, to form the initial preform with an annular, circular cylindrical shape. Other methods may be used, including, weaving two-dimensional woven fabrics, weaving three-dimensional woven fabrics, or braiding. The initial preform is then shaped, as will be described below, to form a port preform 400 (FIG. 9) that can be placed as the port 300 on the mandrel 340 in step S20 (FIG. 4). Also, as will be described further below, multiple initial preforms may be brought together to form the port preform 400.

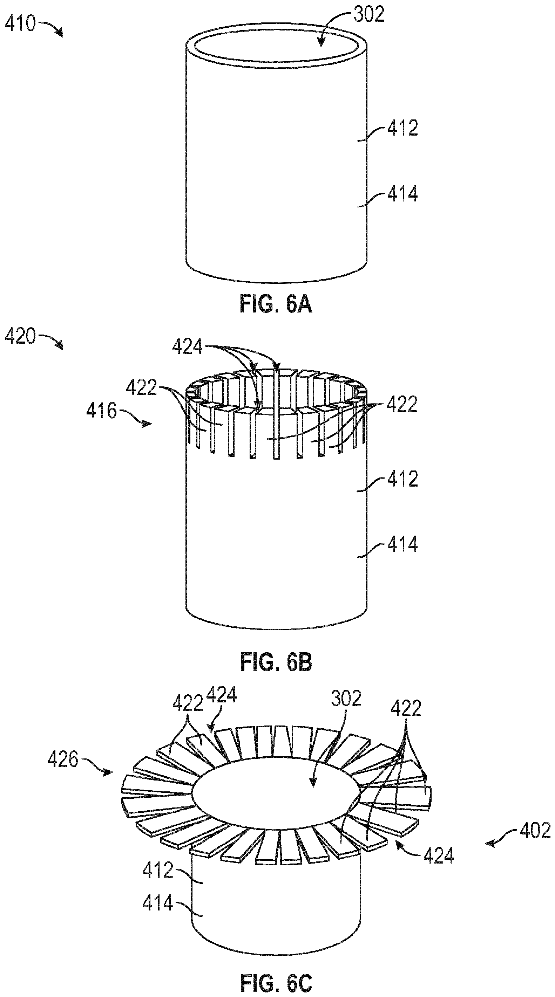

FIGS. 6A to 6C are schematic views illustrating a method of forming the port 300 (FIG. 5) and, more specifically, a shaped preform 402 that may be used as the port preform 400 (FIG. 9), discussed above. FIG. 6A is a first step of forming an initial preform 410. This step includes laying up the plurality of reinforcing fiber tows in the manner discussed above to form a wall region 412. As depicted in FIG. 6A, the wall region 412 is annular and circular. At least a portion of the wall region 412 defines the passage 302 and forms a conduit preform portion 414, which will become the conduit portion 320 of the port 300 (FIG. 5). FIG. 6B is a second step of forming a subsequent initial preform 420 and includes slitting an end portion 416 of the wall region 412 to form a plurality of tabs 422. Each of the tabs 422 are separated by a slit 424, which is formed in an axial direction of the wall region 412. FIG. 6C is a third step of shaping the subsequent initial preform 420 to form the shaped preform 402. The third step includes folding the plurality of tabs 422 to extend outward from the wall region 412 to form a flange preform portion 426, which will become the flange portion 310 of the port 300 (FIG. 5). The shaped preform 402 shown in FIG. 6C may be placed on the mandrel 340 in step S20 (FIG. 4) as the port preform 400 (FIG. 9).

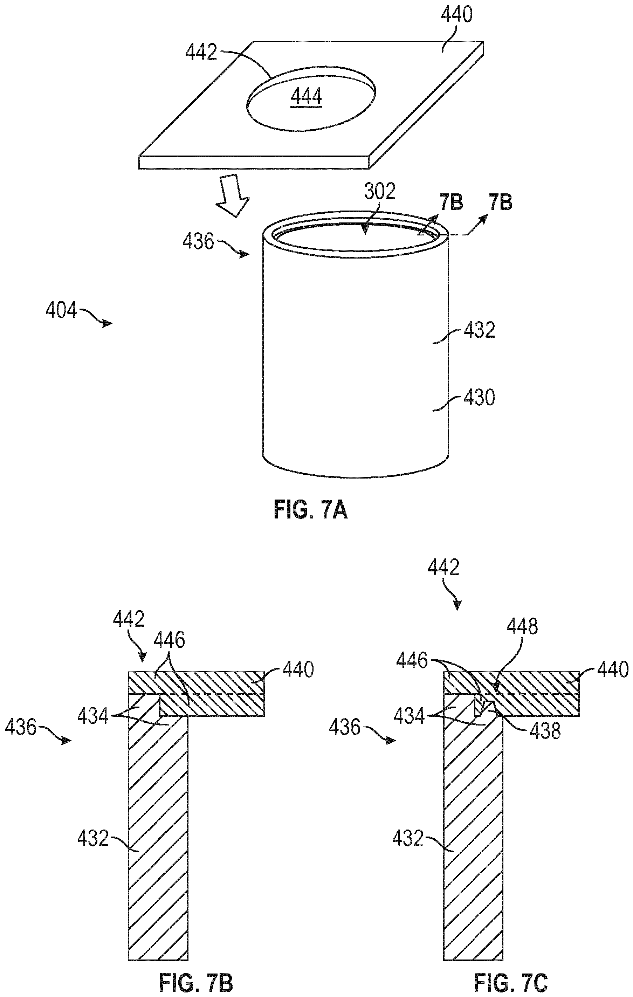

FIG. 7A is a schematic view illustrating another method of forming of forming the port 300 (FIG. 5) and, more specifically, a shaped preform 404 that may be used as the port preform 400 (FIG. 9), discussed above. This method includes laying up the plurality of reinforcing fiber tows in the manner discussed above to form a wall region 432. As depicted in FIG. 7A, the wall region 432 is annular and circular. The wall region 432 defines the passage 302 and forms a conduit preform portion 430, which will become the conduit portion 320 of the port 300 (FIG. 5). This method also includes laying up the plurality of reinforcing fiber tows in the manner discussed above to form a flange preform portion 440. The flange preform portion 440 includes a peripheral edge 442. As depicted in FIG. 7A, the flange preform portion 440 has a rectangular or a square shape, and the peripheral edge 442 defines an opening 444. The opening 444 is circular and the flange preform portion 440 is placed into contact with the wall region 432 such that the opening 444 forms a continuous fluid passage as part of the passage 302. Various geometries may be used to form a strong transition (a flange joint) between the wall region 432 and the flange preform portion 440.

FIG. 7B is a partial, cross-sectional view, taken along line 7B-7B in FIG. 7A of a portion of the port formed in FIG. 7A, showing a first flange joint configuration. The plurality of reinforcing fiber tows of the wall region 432 is laid up to form steps 434 at a stepped end 436 of the wall region 432. Similarly, the plurality of reinforcing fiber tows of the flange preform portion 440 is laid up to form steps 446 at the peripheral edge 442. The method depicted in FIG. 7A may include placing the steps 446 of the peripheral edge 442 to abut the steps 434 of the stepped end 436 of the wall region 432 to form the shaped preform 404. The wall region 432 and the flange preform portion 440 may be temporarily bonded (e.g., tacked) to each other until the shaped preform 404 is cured.

FIG. 7C is a partial, cross-sectional view, similar to FIG. 7B showing an alternate (i.e., a second) flange joint configuration. The second flange joint configuration is similar to the first flange joint configuration discussed above with reference to FIG. 7B and the same reference numerals and discussion of such features applies here. One of the stepped end 436 or the peripheral edge 442 includes an interlocking projection 438 and the other one of the stepped end 436 or the peripheral edge 442 includes an interlocking recess 448. As depicted in FIG. 7C, the stepped end 436 includes the interlocking projection 438 and the peripheral edge 442 includes the interlocking recess 448. When the steps 434 of the stepped end 436 and the steps 446 of the peripheral edge 442 are abutted to each other, the interlocking projection 438 is inserted into the interlocking recess 448 to provide further stability to the flange joint. Various shapes may be used. For example, the interlocking projection 438 may be a circular ridge formed on one of the steps 434 of the stepped end 436, and the interlocking recess 448 may be a circular groove formed on one of the steps 446 of the peripheral edge 442.

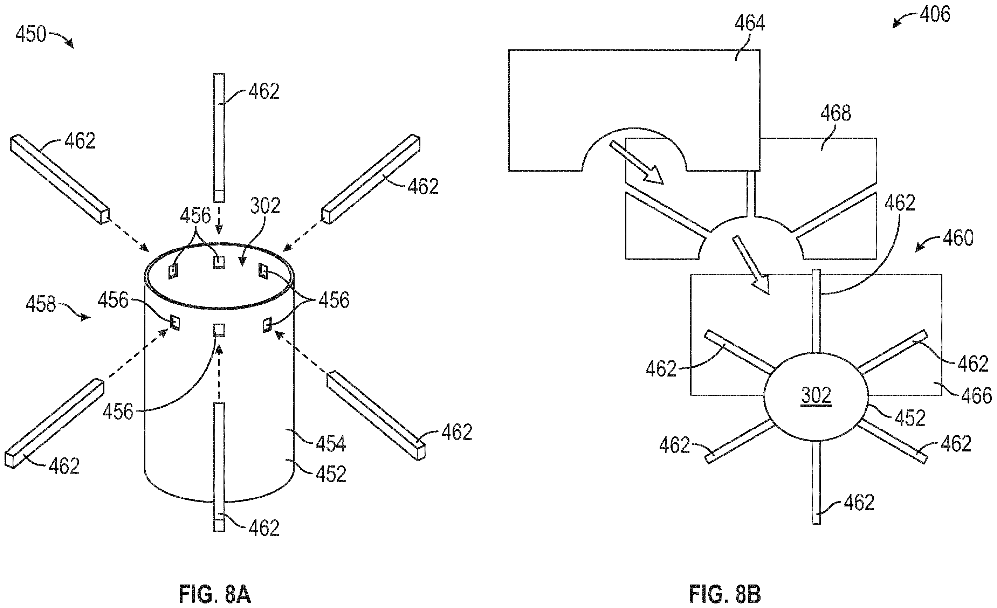

FIGS. 8A and 8B are schematic views illustrating a method of forming the port 300 (FIG. 5) and, more specifically a shaped preform 406 that may be used as the port preform 400 (FIG. 9), discussed above. FIG. 8A is a first step of forming an initial preform 450. This step includes laying up the plurality of reinforcing fiber tows in the manner discussed above to form a wall region 452. As depicted in FIG. 6A, the wall region 452 is annular and circular. The wall region 452 defines the passage 302 and forms a conduit preform portion 454, which will become the conduit portion 320 (FIG. 5) of the port 300 (FIG. 5). A plurality of openings 456 is formed in an end portion 458 of the wall region 452. The openings 456 are radial openings extending through the wall region 452 in a radial direction. As depicted in FIG. 8A, a plurality of pins 462 are inserted into the end portion 458 of the wall region 452 to extend outwardly from the wall region 452. More specifically, each pin 462 is inserted into a corresponding opening 456. Various materials may be used to form the wall region 452, and the pins 462 may comprise reinforcing fiber tows.

FIG. 8B is a second step of forming a flange preform portion 460. This step includes laying up a plurality of reinforcing fiber tows around the pins 462 to form the flange preform portion 460, which will become the flange portion 310 (FIG. 5) of the port 300 (FIG. 5). This step may include laying up a plurality of plies including an inner ply 464, an outer ply 466, and one or more intermediate plies 468 sandwiched between the inner ply 464 and the outer ply 466. The pins 462 may also be sandwiched between the inner ply 464 and the outer ply 466. The intermediate plies 468 may be positioned circumferentially between the pins 462. The pins 462 and the wall region 452, may be temporarily bonded (e.g., tacked) to each other until the shaped preform 406 is cured.

FIG. 9 is a schematic, cross-sectional view of steps S20 and S30 of FIG. 3. After forming the port preform 400 using any one of the methods discussed above or another method, the port preform 400 is placed on a forming tool such as a mandrel 340. As discussed above, the port 300 may include a hydrogen barrier layer 330. The hydrogen barrier layer 330 is depicted in FIG. 9 as being located between the port preform 400 and the mandrel 340, and may be applied as a metallic insert, for example, or using any of the other methods discussed above. In step S30 of FIG. 3, a plurality of reinforcing fiber tows 342 (FIG. 9) are positioned on the mandrel 340 to form tank preform. As noted above, various methods may be used to form the port preform 400 for the port 300 and those methods also apply here. For example, the methods may include winding the plurality of reinforcing fiber tows 342 around the mandrel 340. The reinforcing fiber tows 342 may be moved axially as the mandrel 340 is rotated to form the plurality of plies. As illustrated in FIG. 9, the reinforcing fiber tows 342 may be wound over the flange portion 310 of the port preform 400 to integrate the port preform 400 with the reinforcing fiber tows 342 and the tank preform.

Referring back to FIG. 4, the method includes introducing a matrix material in step S40. After the preform is complete (i.e., the final preform), a matrix material may be injected into the preform in step S40 to generate an infiltrated (or an impregnated) preform. When the composite component is a polymer matrix composite, polymers and/or resin may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes may be used in this step depending upon the matrix material. As noted above, the plies may be formed using prepreg fiber tows, and, in such an embodiment, this occurs when the prepreg fiber tows are laid up.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material. When the port 300 (FIG. 5) is placed on the mandrel 340 (FIG. 9) as a port preform 400 (FIG. 9), the matrix material is introduced and cured in steps S40 and S50 along with the reinforcing fiber tows 342 forming the tank preform, and thus the port preform 400 is co-molded with the tank preform to form the composite hydrogen storage tank 212.

Further, the composite component may be finish machined as needed. Finish machining may define the final finished shape or the contour of the composite component. Additionally, the composite component can be coated with one or more suitable coatings, such as, e.g., an environmental barrier coating (EBC) or a polyurethane surface coating.

Instead of placing the port preform 400 on the mandrel 340 and co-modeling the port preform 400 with the tank preform, the port preform 400 may undergo steps analogous to step S40 and step S50 of FIG. 4 to form the port 300. The discussion of step S40 and step S50 of FIG. 4 also applies here and a detailed discussion is omitted. The now cured port 300 may then be placed on the mandrel 340 and the process continued in the manner discussed above.

Forming the port 300 or the port preform 400 in the manner discussed above allows the port 300 to be integrated with the composite hydrogen storage tank 212. These seamless and integrated ports 300 provide a light weight, a low boiloff, and a low permeation solution for composite hydrogen storage tanks 212. Further aspects of the present disclosure are provided by the subject matter of the following clauses.

A method of manufacturing a composite storage tank for liquid hydrogen. The method includes placing a port on a layup tool. The port includes a flange portion and a conduit portion projecting from the flange portion. The conduit portion includes a passage extending through the conduit portion. The method also includes laying up a plurality of reinforcing fiber tows on the layup tool to integrate the flange portion of the port with the plurality of reinforcing fiber tows. The plurality of reinforcing fiber tows is laid up to form at least a portion of a preform including the port for the composite storage tank. The method further includes introducing a matrix material to the preform and curing the preform including the matrix material to generate the composite storage tank.

The method of the preceding clause, wherein the plurality of reinforcing fiber tows includes prepreg fiber tows to introduce the matrix material.

The method of any preceding clause, wherein introducing a matrix material includes injecting the matrix material into the preform to generate an infiltrated preform, and wherein curing the preform includes curing the infiltrated preform.

The method of the preceding clause, further comprising adding insulation to an outer surface of the composite storage tank formed during curing the preform.

The method of any preceding clause, wherein the layup tool is a mandrel and laying up the plurality of reinforcing fiber tows includes applying the plurality of reinforcing fiber tows to the mandrel as the mandrel rotates.

The method of any preceding clause, wherein the port is a preform comprising a plurality of reinforcing fiber tows.

The method of any preceding clause, wherein the port is a composite component comprising a plurality of reinforcing fiber tows embedded in an at least a partially cured matrix.

The method of any preceding clause, wherein the port includes inward facing surfaces having a hydrogen barrier layer formed thereon.

The method of the preceding clause, wherein the hydrogen barrier layer is a metallic layer.

The method of any preceding clause, further comprising forming the port by forming the conduit portion and forming the flange portion.

The method of the preceding clause, wherein the conduit portion is a conduit preform comprising a plurality of reinforcing fiber tows and the flange portion is a flange preform comprising a plurality of reinforcing fiber tows, wherein, before placing the port on the layup tool. The method further includes introducing a matrix material to the conduit preform and the flange preform and curing the conduit preform and the flange preform including the matrix material to form the port.

The method of any preceding clause, wherein the port includes inward facing surfaces and the method further comprises applying a hydrogen barrier layer to the inward facing surfaces.

The method of the preceding clause, wherein applying a hydrogen barrier layer includes spraying a coating on the inward facing surfaces.

The method of any preceding clause, wherein the port includes inward facing surfaces and the method further comprises placing a metallic insert between the inward facing surfaces of the port and the mandrel, the metallic insert forming a hydrogen barrier layer.

The method of any preceding clause, further comprising laying up a plurality of reinforcing fiber tows to form a wall region, at least a portion of the wall region defining the passage and forming the conduit portion.

The method of the preceding clause, further including slitting an end portion of the wall region to form a plurality of tabs and folding the plurality of tabs to extend outward from the wall region to form the flange portion.

The method of any preceding clause, wherein the plurality of reinforcing fiber tows of the wall region is laid up to form steps at a stepped end. The method further includes laying up a plurality of reinforcing fiber tows to form the flange portion with a peripheral edge, the peripheral edge including steps and placing the steps of the peripheral edge to abut the steps of the stepped end of the wall region.

The method of the preceding clause, wherein one of the stepped end or the peripheral edge includes an interlocking projection and the other one of the stepped end or the peripheral edge includes an interlocking recess, and the method further comprises inserting the interlocking projection into the interlocking recess.

The method of any preceding clause, further comprising inserting a plurality of pins into an end portion of the wall region to extend outward from the wall region, the pins being part of the flange portion.

The method of the preceding clause, further comprising laying up a plurality of reinforcing fiber tows around the pins to form the flange portion.

The method of any preceding clause, wherein the pins comprise reinforcing fiber tows.

Although the foregoing description is directed to the preferred embodiments, other variations and modifications will be apparent to those skilled in the art, and may be made without departing from the disclosure. Moreover, features described in connection with one embodiment may be used in conjunction with other embodiments, even if not explicitly stated above.

## Claims

1. A method of manufacturing a composite storage tank (212) for liquid hydrogen, the method comprising:
placing a port (300) on a layup tool (340), the port (300) including a flange portion (310) and a conduit portion (320) projecting from the flange portion (310), the conduit portion (320) including a passage (302) extending through the conduit portion (320);
laying up a plurality of reinforcing fiber tows (342) on the layup tool (340) to integrate the flange portion (310) of the port (300) with the plurality of reinforcing fiber tows (342), the plurality of reinforcing fiber tows (342) being laid up to form at least a portion of a preform including the port (300) for the composite storage tank (212);
introducing a matrix material to the preform; and
curing the preform including the matrix material to generate the composite storage tank (212).

2. The method of claim 1, wherein the plurality of reinforcing fiber tows (342) includes prepreg fiber tows to introduce the matrix material, or
wherein introducing a matrix material includes injecting the matrix material into the preform to generate an infiltrated preform, and
wherein curing the preform includes curing the infiltrated preform.

3. The method of claim 1 or 2, wherein the layup tool (340) is a mandrel (340) and laying up the plurality of reinforcing fiber tows (342) includes applying the plurality of reinforcing fiber tows (342) to the mandrel (340) as the mandrel (340) rotates.

4. The method of any one of claims 1 to 3, wherein the port (300) is a preform (400) comprising a plurality of reinforcing fiber tows (342), or
wherein the port (300) is a composite component comprising a plurality of reinforcing fiber tows (342) embedded in an at least a partially cured matrix.

5. The method of any one of claims 1 to 4, wherein the port (300) includes inward facing surfaces (322) having a hydrogen barrier layer (330) formed thereon.

6. The method of claim 5, wherein the hydrogen barrier layer (330) is a metallic layer.

7. The method of claim any one of claims 1 to 6, further comprising forming the port (300) by forming the conduit portion (320) and forming the flange portion (310).

8. The method of claim 7, wherein the conduit portion (320) is a conduit preform (414, 430, 454) comprising a plurality of reinforcing fiber tows (342) and the flange portion (310) is a flange preform (426, 440, 460) comprising a plurality of reinforcing fiber tows (342),
wherein, before placing the port (300) on the layup tool (340), the method further comprises:
introducing a matrix material to the conduit preform (414, 430, 454) and the flange preform (426, 440, 460); and
curing the conduit preform (414, 430, 454) and the flange preform (426, 440, 460) including the matrix material to form the port (300).

9. The method of claim 7 or 8, wherein the port (300) includes inward facing surfaces (322) and the method further comprises applying a hydrogen barrier layer (330) to the inward facing surfaces (322), or
wherein the port (300) includes inward facing surfaces (322) and the method further comprises placing a metallic insert between the inward facing surfaces (322) of the port (300) and the layup tool (340), the metallic insert forming a hydrogen barrier layer (330).

10. The method of claim any one of claims 7 to 9, further comprising laying up a plurality of reinforcing fiber tows (342) to form a wall region (412, 432, 452), at least a portion of the wall region (412, 432, 452) defining the passage (302) and forming the conduit portion (320).

11. The method of claim 10, further comprising:
slitting an end portion of the wall region (412) to form a plurality of tabs (422); and
folding the plurality of tabs (422) to extend outward from the wall region (412) to form the flange portion (310, 426).

12. The method of claim 10, wherein the plurality of reinforcing fiber tows (342) of the wall region (432) is laid up to form steps (434) at a stepped end (436), and the method further comprises:
laying up a plurality of reinforcing fiber tows (342) to form the flange portion (310, 440) with a peripheral edge (442), the peripheral edge (442) including steps (446); and
placing the steps (446) of the peripheral edge (442) to abut the steps (434) of the stepped end (436) of the wall region.

13. The method of claim 12, wherein one of the stepped end (436) or the peripheral edge (442) includes an interlocking projection (438) and the other one of the stepped end (436) or the peripheral edge (442) includes an interlocking recess (448), and the method further comprises inserting the interlocking projection (438) into the interlocking recess (448).

14. The method of claim 10, further comprising inserting a plurality of pins (462) into an end portion (458) of the wall region (452) to extend outward from the wall region (452), the pins (458) being part of the flange portion (310, 460).

15. The method of claim 14, further comprising laying up a plurality of reinforcing fiber tows (342) around the pins (462) to form the flange portion (310).
